Europäisches Patentamt

European Patent Office

Office européen des brevets

(11) Veröffentlichungsnummer : **0 072 426**
**B1**

(12) **EUROPÄISCHE PATENTSCHRIFT**

(45) Veröffentlichungstag der Patentschrift :
**30.01.85**

(21) Anmeldenummer : **82106109.0**

(22) Anmeldetag : **08.07.82**

(51) Int. Cl.⁴ : **B 27 K   3/50**, A 01 N 55/04//
D21H5/22 ,(A01N55/04,
33/26)

(54) **Mit Wasser verdünnbares Mittel mit bakterizider und fungizider Wirkung.**

(30) Priorität : **06.08.81 DE 3131154**

(43) Veröffentlichungstag der Anmeldung :
**23.02.83 Patentblatt 83/08**

(45) Bekanntmachung des Hinweises auf die Patenterteilung : **30.01.85 Patentblatt 85/05**

(84) Benannte Vertragsstaaten :
**BE CH DE FR LI NL SE**

(56) Entgegenhaltungen :
**EP-A- 0 008 606**
**EP-A- 0 035 096**
**DE-A- 2 633 452**
**CHEMICAL ABSTRACTS, Band 87, Nr. 20, 14. November 1977, Seite 80, Nr. 153629h, Columbus Ohio (USA);**
**Die Akte enthält technische Angaben, die nach dem Eingang der Anmeldung eingereicht wurden und die nicht in dieser Patentschrift enthalten sind.**

(73) Patentinhaber : **SCHERING AKTIENGESELLSCHAFT Berlin und Bergkamen**
**Waldstrasse 14 Postfach 15 40**
**D-4709 Bergkamen (DE)**

(72) Erfinder : **Landsiedel, Horst**
**Auf dem Spitt 34**
**D-5758 Fröndenberg (DE)**
Erfinder : **Plum, Hans, Dr. Dipl.-Chem.**
**Sulkshege 12**
**D-4700 Hamm (DE)**

**Beschreibung**

Die Erfindung betrifft mit Wasser verdünnbare Formulierungen mit bakterizider und fungizider wirkung, die, insbesondere in wäßrigen Formulierungen als Holzschutzmittel, Desinfektionsmittel, als Biozid für Anstrichsysteme und zur bakteriziden und fungiziden Ausrüstung von Textilien, Kunststoffen, Klebstoffen, Baustoffen, Papieren, Leder, Bohr- und Schneidölen, Kreislaufkühlwasser geeignet sind.

Diese erfindungsgemäßen Mittel enthalten als Wirkstoffe

a) Trialkylzinnverbindungen mit einer Gesamt-C-Zahl der am Zinn gebundenen Alkylgruppen von 9-12 und

b) Alkylisalz des N'-Hydroxy-N-cyclohexyl-diazeniumoxids

vorzugsweise im Gewichtsverhältnis von 5 : 1 bis 1 : 5, insbesondere 3 : 1 bis 1 : 3.

Das erfindungsgemäße Mittel ist besonders zur Verwendung in wäßrigen Formulierungen zusammen mit üblichen Emulgatoren, insbesondere für den Holzschutz geeignet, die Wirkstoffkonzentration liegt dabei vorzugsweise zwischen 0,05 und 5 Gew.-%, für den Holzschutz im Bereich von 0,1 bis 3 Gew.-%.

Die hohe Wirksamkeit von Triorganozinnverbindungen gegen Mikroorganismen, z. B. schädliche Pilze und Bakterien, ist bekannt. Das Wirkungsoptimum dieser Verbindungsklasse liegt im allgemeinen dann vor, wenn die Gesamt-C-Zahl der am Zinn gebundenen Alkylgruppen 9-12 beträgt. Kürzere oder längere Gruppen verringern die biozide Wirksamkeit. Triorganozinnverbindungen zeigen zwar ein relativ breites Wirkungsspektrum ; gegen verschiedene Mikroorganismen, z. B. gramnegative Bakterien und bestimmte Bläuepilze, ist die Wirkung jedoch vergleichsweise schwach.

Eine andere Gruppe von Bioziden, die hauptsächlich als Holzschutzmittel eingesetzt wird, ist beschrieben in DE-PS 1 024 743. Es handelt sich um Salze des N'-Hydroxy-N-cyclohexyl-diazeniumoxids. Nachteilig bei diesen Verbindungen ist, daß zum Schutz des Holzes hohe Anwendungskonzentrationen erforderlich sind und die Wirkung gegen holzverfärbende Pilze und holzbesiedelnde Bakterien gering ist.

Aus diesen Gründen werden Mischungen von Salzen des N'-Hydroxy-N-cyclohexyl-diazeniumoxids mit anderen speziellen Bioziden zur Erhöhung der Wirksamkeit bzw. Erweitung des Wirkungsspektrums vorgeschlagen (DE-OS 2 336 290, DE-OS 2 341 882).

In DE-A-26 33 452 werden Triorganozinnverbindungen von Hydrodiazeniumoxiden beschrieben. Die Verbindungen sind in organischen Lösungsmitteln gut löslich und eignen sich insbesondere für den Einsatz in öligen Holzschutzmitteln.

Es wurde nun überraschend gefunden, daß Mischungen von Trialkylzinnverbindungen mit Salzen des N'-Hydroxy-N-cyclohexyl-diazeniumoxids eine synergistische Wirkung zeigen, insbesondere gegen gramnegative Bakterien und Pilze, die zu der Klasse der im allgemeinen schwer zu bekämpfenden Ascomyceten und Fungi imperfecti gehören. Ebenfalls ist gegen holzzerstörende Pilze und grampositive Bakterien eine Wirkungssteigerung festzustellen.

Die erfindungsgemäßen Mittel lassen sich ausgezeichnet in Form von wäßrigen Formulierungen, insbesondere für den Holzschutz, einsetzen, z. B. für frisch geschlagenes Holz, das leicht von Bakterien und Pilzen wie Aspergillus- und Trichoderma-Arten befallen wird ; ebenso für Bauholz, das durch die synergistische Wirkung der erfindungsgemäßen Wirkstoffkombination gegen holzzerstörende Pilze und auch gegen Bakterienbefall geschützt wird. Bakterien bewirken keinen Abbau des Holzes, können jedoch einen Angriff durch Pilze begünstigen.

Für den Einsatz in wäßrigen Formulierungen können die erfindungsgemäßen Mittel in Form von stabilen wäßrigen Konzentraten, die übliche Emulgatoren, vorzugsweise nichtionogene Emulgatoren wie Alkylarylpolyglykoläther enthalten, bereitgestellt werden. In solchen Konzentraten liegt die Wirkstoffmischung in einer Konzentration von 10 bis 25 Gew.-% vor ; diese lassen sich problemlos zu stabilen Anwendungskonzentrationen verdünne.

Des weiteren eignen sich die erfindungsgemäßen Mittel zur bioziden Ausrüstung von wäßrigen Anstrichsystemen, z. B. Dispersionen, als Topfkonservierung und Schutz gegen Befall des Anstrichs durch Bakterien und Pilze, speziell auch gegen den Befall von wäßrigen Holzanstrichsystemen, z. B. Alkydharzdispersionen, durch Bläuepilze.

Ebenso können die wäßrigen Formulierungen zur bioziden Ausrüstung verschiedener Materialien wie Papiere, Pappen, Kunststoffe, Textilien, Klebstoffe, Baustoffe und Leder eingesetzt werden.

Ein weiteres Einsatzgebiet ist die Ausrüstung von Wasserflotten gegen unerwünschte Mikroorganismen, z. B. Kreislaufkühlwasser, Fabrikationswasser bei der Papierproduktion oder Bohr- und Schneidöle.

Die Wirkstoffkonzentrationen liegen je nach Anwendungsgebiet im Bereich von 0,1-5 % für den Holzschutz, 0,05-3 % für Ausrüstungen von Anstrichsystemen, Papieren, Textilien, Baustoffen usw. sowie 0,000 1-0,2 % bei Kühl- und Fabrikationswassern und Bohr- und Schneidölen.

Beispiel 1

10 % Wirkstoff enthaltende Formulierung

4 Gew.-Teile Tri-n-butylzinnoxid

2

# 0 072 426

20 Gew.-Teile 30 %ige wäßrige Lösung von K-Salz des N'-Hydroxy-N-cyclohexyl-diazeniumoxids
20 Gew.-Teile nichtionogener Emulgator (Marlowet ISM *)
56 Gew.-Teile Wasser.

Die Komponenten werden durch Rühren homogenisiert und man erhält eine klare bis ganz schwach getrübte Mischung, die mit Leitungswasser bis etwa zum Verhältnis 1 : 50 verdünnt stabile, klare bis schwach opalisierende Zubereitungen ergibt.

## Beispiel 2

10 % Wirkstoff enthaltende Formulierung

5,7 Gew.-Teile Tri-n-butylzinnlinoleat
14,3 Gew.-Teile 30 %ige wäßrige Lösung von K-Salz des N'-Hydroxy-N-cyclohexyl-diazeniumoxids
21,5 Gew.-Teile nichtionogener Emulgator (Marlowet ISM*)
58,5 Gew.-Teile Wasser.

Die Komponenten werden durch Rühren homogenisiert und man erhält eine klare bis ganz schwach getrübte Mischung, die mit Leitungswasser bis etwa zum Verhältnis 1 : 50 verdünnt stabile, klare bis schwach opalisierende Zubereitungen ergibt.

## Beispiel 3

24 % Wirkstoff enthaltende Formulierung

12 Gew.-Teile Tri-n-butylzinn-nahphthenat
40 Gew.-Teile 30 %ige wäßrige Lösung von K-Salz des N'-Hydroxy-N-cyclohexyl-diazeniumoxids
48 Gew.-Teile nichtionogener Emulgator (Marlowet ISM).

Die Komponenten werden durch Rühren homogenisiert und man erhält eine klare bis ganz schwach getrübte Mischung, die mit Leitungswasser bis etwa zum Verhältnis 1 : 100 verdünnt stabile, klare bis schwach opalisierende Zubereitungen ergibt.

## Beispiel 4

15 % Wirkstoff enthaltende Formulierung

6 Gew.-Teile Tri-n-butylzinnabietat
30 Gew.-Teile 30 %ige wäßrige Lösung von K-Salz des N'-Hydroxy-N-cyclohexyl-diazeniumoxids
24 Gew.-Teile nichtionogener Emulgator (Marlowet ISM)
40 Gew.-Teile Wasser.

Die Komponenten werden durch Rühren homogenisiert und man erhält eine klare bis ganz schwach getrübte Mischung, die mit Leitungswasser bis etwa zum Verhältnis 1 : 75 verdünnt stabile, klare bis schwach opalisierende Zubereitungen ergibt.

## Tabelle 1

Zum Wirkungsvergleich wurden mit den im folgenden näher bezeichneten wäßrigen Lösungen Papierrundfilter (Ø 5,5 cm) getränkt, an der Luft getrocknet und danach in Petrischalen auf Plate-Count-Agar, der mit Bakteriensuspension beimpft war, gelegt und 2 Tage bei + 37 °C bebrütet. Danach wurden die Größen der Hemmzonen um die Filter bestimmt :

(Siehe Tabelle 1 Seite 4 f.)

(*) Marlowet ISM = Alkylarylpolyglykoläther

3

| Wirkstoff-Lösung | | Hemmzonen in mm | | |
|---|---|---|---|---|
| | Gew.-% | Bacillus subtilis | Bacillus mesentericus | Proteus vulgaris |
| Tri-n-butylzinnoxid | 1 | 12-15 | 12-15 | 5-7 |
| | 0,5 | 10-12 | 12-15 | 3-5 |
| | 0,2 | 10-12 | 10-12 | 0-1 |
| Tri-n-butylzinnlinoleat | 1 | 6-7 | 7-8 | 2-3 |
| | 0,5 | 4-6 | 5-6 | 1-2 |
| | 0,2 | 2-3 | 3-4 | 0-1 |
| K-Salz des N'-Hydroxy-N-cyclohexyldiazeniumoxids | 1 | 0-1 | 2-4 | 0 |
| | 0,5 | 0 | 0-1 | 0 |
| | 0,2 | 0 | 0-1 | 0 |
| Beispiel 1 | 1 | > 15 | > 15 | 12-15 |
| | 0,5 | > 15 | > 15 | 8-10 |
| | 0,2 | 10-12 | > 15 | 6-8 |
| Beispiel 2 | 1 | 12-15 | 12-15 | 12-15 |
| | 0,5 | 10-12 | 10-12 | 12-15 |
| | 0,2 | 9-10 | 10-12 | 8-10 |

Tabelle 2

Nach der Methode aus Tabelle 1 wurden getränkte Papierrundfilter auf Biomalzagar, besprüht mit Sporensuspension von Testpilzen, gelegt und 3 Wochen bei + 30 °C bebrütet. Danach wurden die Hemmzonen um die Proben bestimmt :

| Wirkstoff-Lösung | | Hemmzonen in mm | | | |
|---|---|---|---|---|---|
| | Gew.-% | Trichoderma viride | Cladosporum herbarum | Aspergillus versicolor | Pullularia pullulans |
| Tri-n-butylzinnoxid | 1,0 | 4-6 | 6-8 | 6-8 | 2-3 |
| | 0,5 | 3-5 | 2-4 | 3-4 | 1-2 |
| | 0,2 | 2-3 | 0-1 | 1-2 | 0-1 |
| Tri-n-butylzinnnaphthenat | 1,0 | 2-3 | 2-3 | 3-4 | 1-2 |
| | 0,5 | 1-2 | 1-2 | 1-2 | 0-1 |
| | 0,2 | 0-1 | 0 | 0 | 0 |
| Tri-n-butylzinnabietat | 1,0 | 2-3 | 1-2 | 2-3 | 1-2 |
| | 0,5 | 1-2 | 0-1 | 0-1 | 0-1 |
| | 0,2 | 0-1 | 0 | 0 | 0 |
| K-Salz des N'-Hydroxy-N-cyclohexyldiazeniumoxids | 1,0 | 0* | 5-7 | 2-4 | 6-8 |
| | 0,5 | 0* | 0 | 0* | 0 |
| | 0,2 | 0* | 0 | 0* | 0 |
| Beispiel 1 | 1 | 8-10 | 12-15 | > 15 | 12-15 |
| | 0,5 | 5-7 | 10-12 | 12-15 | 10-12 |
| | 0,5 | 2-3 | 8-10 | 10-12 | 10-12 |
| Beispiel 3 | 1 | 5-6 | 10-12 | 12-15 | 10-12 |
| | 0,5 | 3-4 | 8-10 | 10-12 | 10-12 |
| | 0,2 | 1-2 | 6-8 | 8-10 | 8-10 |
| Beispiel 4 | 1 | 4-5 | 10-12 | 12-15 | 10-12 |
| | 0,5 | 3-4 | 6-7 | 9-10 | 8-10 |
| | 0,2 | 2-3 | 4-5 | 6-8 | 6-8 |

(Siehe Tabelle 3 Seite 5 f.)

Tabelle 3

Nach der Methode aus Tabelle 2 wurden die Hemmzonen um die Proben bestimmt :

| Wirkstoff-Lösung | Gew.-% | Hemmzonen in mm Chaetomium globosum | Poria monticola | Lenzites trabea |
|---|---|---|---|---|
| Tri-n-butylzinnoxid | 0,5 | 8-10 | 7-9 | 10-12 |
| | 0,2 | 6-8 | 5-7 | 6-8 |
| Tri-n-butylzinnlinoleat | 0,5 | 3-4 | 3-4 | 5-7 |
| | 0,2 | 1-2 | 1-2 | 2-3 |
| Tri-n-butylzinnnaphthalat | 0,5 | 2-3 | 2-3 | 4-5 |
| | 0,2 | 0-1 | 1-2 | 2-3 |
| K-Salz des N'-Hydroxy-N-cyclohexyl-diazeniumoxids | 0,5 | 2-3 | 4-6 | 4-5 |
| | 0,2 | 0 | 0 | 0 |
| Beispiel 1 | 0,5 | 12-15 | 8-10 | 12-15 |
| | 0,2 | 8-10 | 6-8 | 8-10 |
| Beispiel 2 | 0,2 | 3-4 | 3-4 | 4-6 |
| Beispiel 3 | 0,5 | 5-7 | 4-5 | 6-8 |
| | 0,2 | 2-3 | 3-4 | 4-5 |

Zum Wirkungsvergleich wurden Kiefernsplintholzklötzchen der Abmessung $5 \times 2,5 \times 1,5$ cm in folgenden wäßrigen Wirstofflösungen getränkt :

A 2 % Tri-n-butylzinn-naphthenat
B 2 % K-Salz des N'-Hydroxy-N-cyclohexyl-diazeniumoxids
C 2 % Wirkstoffkombination aus Beispiel 3
D ohne Wirkstoff

Nach dem Trocknen und Sterilisieren wurde je ein Klötzchen mit und ohne Wirkstoff in eine Kalleschale mit Biomalzagar, besprüht mit Sporensuspension von Testpilzen, eingebaut und 10 Wochen bei + 30 °C bebrütet. Danach wurde das Wachstum des Pilzmycels an bzw. auf den Proben visuell beurteilt :

Hemmwirkung von getränkten Holzklötzchen gegen Testpilze im Kalleschalen-Versuch

| Tränk-lösung | Aufnahme Wirkstoff Gew.-% | Testpilze Trichoderma viride Bewuchs der Probe (*) | HZ (*) | Pullularia Pullulans Bewuchs der Probe (*) | HZ (*) |
|---|---|---|---|---|---|
| A | 0,031 | − | 1-2 | | |
| D | − | +++ | − | | |
| A | 0,033 | | | − | 0-1 |
| D | − | | | +++ | − |
| B | 0,034 | ++ | − | | |
| D | − | +++ | − | | |
| B | 0,030 | | | − | 1-2 |
| D | − | | | +++ | − |
| C | 0,029 | − | 4-5 | | |
| D | − | +++ | − | | |
| C | 0,033 | | | − | 3-4 |
| D | − | | | +++ | − |

(*) Bewuchs der Probe :
  − = kein Bewuchs.
  + = leichter Bewuchs.
 ++ = mittlerer Bewuchs.
+++ = starker Bewuchs.
HZ = Hemmzone um die Probe in mm.

**Ansprüche**

1. Wäßriges Konzentrat mit bakterizider und fungizider Wirkung, enthaltend ein Wirkstoffgemisch aus

a) emulgierten Trialkylzinnverbindungen mit einer Gesamt-C-Zahl der am Zinn gebundenen Alkylgruppen von 9-12 oder Triphenylzinnverbindungen, ausgenommen Triorganozinnhalogenide, und

b) Alkalisalz des N'-Hydroxy-N-cyclohexyl-diazeniumoxids.

2. Mittel gemäß Anspruch 1 mit einem Gemisch der Wirkstoffe im Gewichtsverhältnis von 5 : 1 bis 1 : 5, insbesondere 3 : 1 bis 1 : 3.

3. Verwendung des Mittels gemäß den Ansprüchen 1 und 2 in übliche Emulgatoren enthaltenden wäßrigen Formulierungen mit einer Wirkstoffkonzentration von 0,1 bis 3 Gew.-% für den Holzschutz.

**Claims**

1. Aqueous concentrate having a bactericidal and fungicidal action, containing a mixture of active ingredients comprising

a) emulsified trialkyltin compounds having a total number of carbon atoms in the alkyl groups bonded to the tin atom of from 9 to 12, or triphenyltin compounds, with the exception of triorganotin halides, and

b) the alkali metal salt of N'-hydroxy-N-cyclohexyldiazeniumoxide.

2. Agent according to claim 1 containing a mixture of the active ingredients in a weight ratio of from 5 : 1 to 1 : 5, especially from 3 : 1 to 1 : 3.

3. Use of the agent according to claims 1 and 2 in aqueous formulations containing customary emulsifiers and having a concentration of active ingredient of from 0,1 to 3 per cent by weight for the protection of wood.

**Revendications**

1. Concentré aqueux possédant une action bactéricide et fongicide, contenant un mélange de substances constitué

a) de composés du trialkylétain émulsionnés ayant un nombre de C total des groupes alkyles liés à l'étain de 9 à 12 ou composés du triphénylétain, à l'exception des halogénures de triorganoétain, et

b) d'un sel alcalin de l'oxyde de N'-hydroxy-N-cyclohexyl-diazénium.

2. Agent suivant la revendication 1 dans lequel les substances actives sont dans un rapport pondéral de 5 : 1 à 1 : 5, en particulier de 3 : 1 à 1 : 3.

3. Utilisation de l'agent suivant les revendications 1 et 2 dans des formules aqueuses contenant des émulsionnants ordinaires, ayant une concentration des substances actives de 0,1 à 3 % en poids pour la protection du bois.